# EUROPEAN PATENT SPECIFICATION

(11) **EP 0 303 708 B1**
(45) Date of publication and mention of the grant of the patent: **01.12.1993**
(21) Application number: 88901917.0
(22) Date of filing: 18.02.1988
(51) Int. Cl.: G05B 19/42, G05B 19/405, B25J 9/22, B25J 13/06

(54) **TEACHING INSTRUCTION PANEL FOR INDUSTRIAL ROBOTS**
LERNPANEEL FÜR INDUSTRIELLE ROBOTER
MANETTE D'INSTRUCTIONS D'APPRENTISSAGE POUR ROBOTS INDUSTRIELS

(30) Priority: 25.02.1987 JP 25493/87 U
(43) Date of publication of application: 22.02.1989
(73) Proprietor: FANUC LTD., Minamitsuru-gun, Yamanashi 401-05 (JP)
(72) Inventor: TOYODA, Kenichi, Hino-shi Tokyo 191 (JP); TORII, Nobutoshi Fuyo Haitsu 308, Hachioji-shi Tokyo 192 (JP); ITO, Susumu Tabata 4F, Hino-shi Tokyo 191 (JP); NIHEI, Ryo Mezon Rira 202, Musashino-shi Tokyo 180 (JP); ITO, Takayuki Shibaso 101, Hino-shi Tokyo 191 (JP)
(74) Representative: Brunner, Michael John
(86) International application number: JP8800167
(87) International publication number: WO8806509

(56) References cited:
- EP-A- 0 146 631
- FR-A- 2 525 944
- GB-A- 2 120 203
- JP-A-58 109 902
- JP-A-59 227 384
- JP-U-60 153 787
- JP-U-61 126 305
- JP-U-61 153 244
- Le Nouvel Automatisme vol. XXVI, no. 22, May 1981, PARIS FR page 26 Renault: "Les Robots de soudage"

## Description

The present invention relates to a teaching panel for a robot apparatus, more particularly to a teaching panel for a robot apparatus provided with shift keys to enable reliable teaching operations.

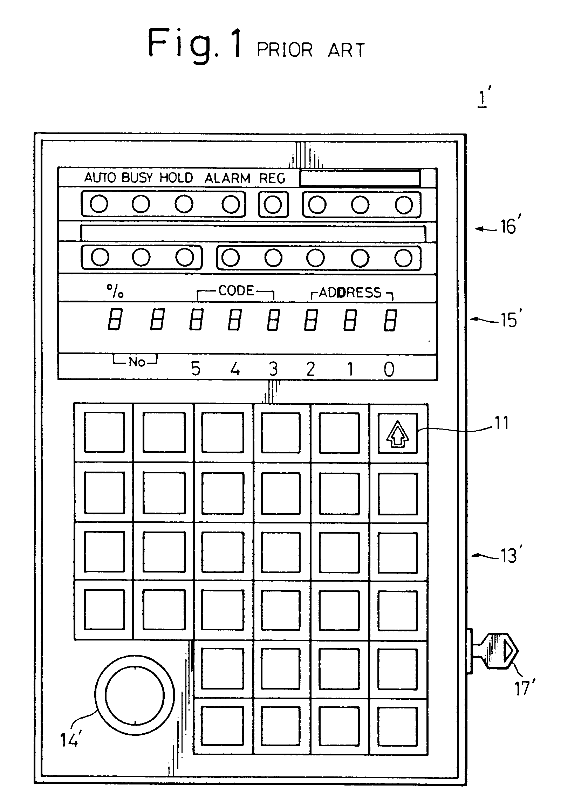

Figure 1 shows an example of a conventional teaching panel for a robot apparatus. As is well known, the teaching panel is connected to a control unit (not shown) which directly controls the robot apparatus. A worker stands near the robot apparatus, holds the teaching panel 1', and for example, brings the hand of the robot mechanical unit (not shown) above the workpiece, makes the hand grasp the workpiece, moves the arm of the robot mechanical unit, makes it carry the workpiece to another position, and instructs other operations so as to drive the robot apparatus through the control unit. Therefore, the teaching panel 1' is provided with an operational key unit 13' on which a variety of operational keys are arranged, an indicator unit 16' which indicates the taught operations and the operating state of the robot apparatus, and an emergency stop pushbutton switch 14' for emergency stops in the event of erroneous operations of the robot apparatus etc. To perform the above operations, there is further provided a connection point switching key 17' for electrically connecting the teaching panel 1' to the control unit.

Recently, a demand has arisen for a greater safety in robot teaching operations. Namely, with only the operation of the operational keys of the operational key unit 13', for example, if a finger unintentionally touches an unrelated operational key, the erroneous operation would immediate lead to an unwanted operation of the robot apparatus, which would be very dangerous. Therefore, safety is maintained by applying an interlock based on a two-step operation so that the operation of the operational keys is effective only when a shift key 11 is depressed.

The teaching panel 1' of Fig. 1 is designed so that the teaching panel is held by the left hand and the predetermined operational keys can be pushed by the thumb of the right hand while the shift key 11 is pushed by the middle finger of the right hand.

As clear from Fig. 1, the teaching panel 1' is made for right handed workers, so has the problems of a lack of operability by left handed workers, which might cause erroneous operations.

If, to resolve this problem, teaching panels for right handed persons and teaching panels for left handed persons were made separately, not only would the price of the equipment rise, but also there would be a need for a modification of connections and the possibility of secondary erroneous operations accompanying the same.

Further, even when right handed workers use the teaching panel 1' shown in Fig. 1, they must change the angle of their right hands about the middle fingers pushing the shift keys 11 to reach the operational keys to be pushed. Depending on the position of the operational key, this can be a troublesome operation, and a good operability is not necessarily guaranteed.

An object of the present invention is to provide a teaching panel for a robot apparatus which is applicable for both right handed and left handed workers.

Another object of the present invention is to provide a teaching panel for a robot apparatus which enables a shift key operation according to the mode of utilization by users, to further improve the operability thereof.

GB-A-2120203 discloses a robot which can be taught its desired operating movements using a pendant.

According to the present invention, there is provided a teaching panel, for teaching operations to a robot apparatus through a control system, the panel comprising: a plurality of teaching keys for teaching a robot apparatus an operation; characterised by: two shift keys on the front of the panel at opposed positions; registration means for registering in advance user-selection of only one of the shift keys as a valid shift key or both of the shift keys each as a valid shift key; the arrangement being such that teaching of a robot apparatus using the plurality of teaching keys is enabled only when the valid shift key or one of the valid shift keys is operated substantially simultaneously with the teaching keys.

As two shift keys are provided at opposed positions, and the validity of the operation of one or both of the keys is registered in advance, use by either a right handed person or left handed person is possible.

Further, by placing the shift keys at appropriate positions, operation of the shift keys by any finger of the hand holding the teaching panel, for example, the thumb, becomes possible and operation of the teaching keys by the fingers of the other hand becomes possible.

In the drawings:
Fig. 1 is a front view of a conventional teaching panel;
Fig. 2 is a front view of a teaching panel according to an embodiment of the present device; and,
Fig. 3 is a connection diagram of switches of a teaching panel according to an embodiment of the present device and switches of a control unit.

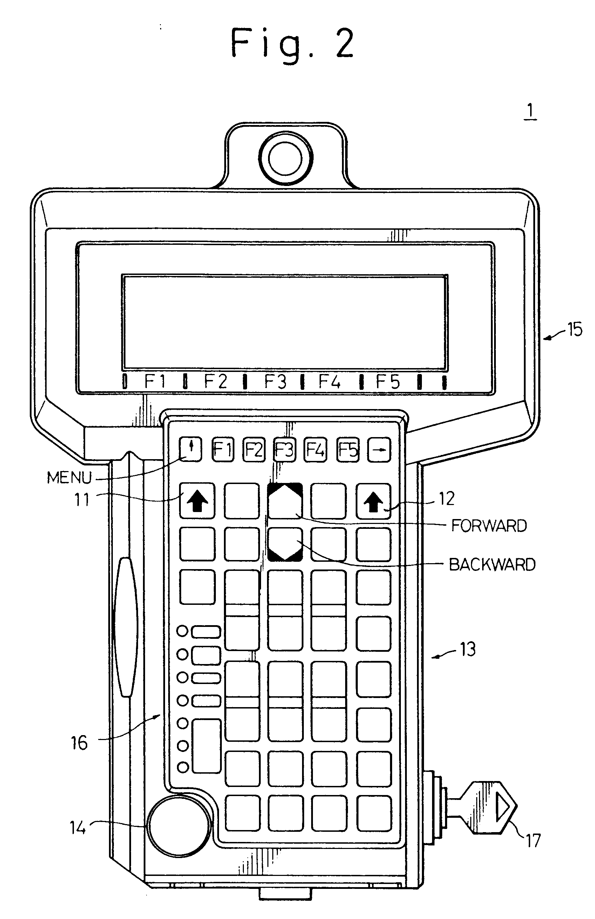

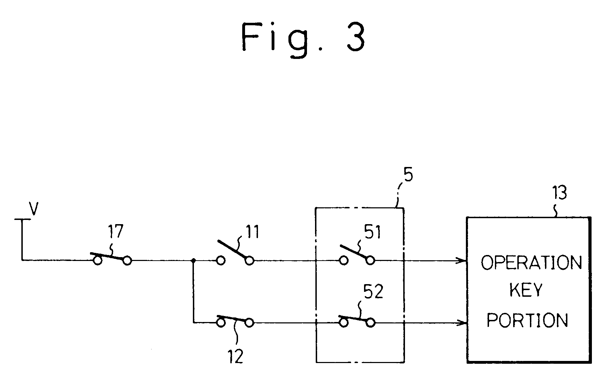

An embodiment of the present device will now be explained with reference to Fig. 2 and Fig. 3.

Figure 2 shows a front view of a teaching panel. In the figure, the teaching panel 1 has an operational key unit 13 provided with a plurality of operational teaching keys, a display unit 15, and indicator unit 16, a system key 17, and an emergency stop PBS 14.

The teaching panel 1 is further provided with two shift keys 11 and 12 at the front at opposing positions.

The operational teaching key unit 13 has a thickness which enables it to be held by one hand. When the teaching panel 1 is gripped by the left hand, the left side shift key 11 is located at a position enabling easy operation of the shift key 11 by the thumb of the left hand, which is a free finger. Similarly, when the teaching panel 1 is gripped by the right hand, the right side shift key 12 is located at a position enabling easy operation of the shift key 12 by the free thumb.

By constructing the teaching panel 1 in the above way, for example, right handed worker can hold the teaching panel in the left hand and operate the shift key 11 with the thumb of the left hand and, while doing so, use the right hand fingers to freely operate, for example, the "FORWARD", "BACKWARD", and other operational keys. A right handed worker can hold the teaching panel in the right hand and operate the shift key 12 with the thumb of the right hand and while doing so, use the left hand fingers to select the operational teaching keys.

Further, some users can hold the teaching panel in the left hand and operate the shift key 12 with the index finger of the right hand, and while doing so, use the thumb to operate the operational teaching keys and perform other operations.

By providing two shift keys and constructing the teaching panel as illustrated in the above way, not only is use made possible according to the mode of utilization by the user, but the operability is also improved.

On the other hand, if two shift keys are provided and both are made valid at all times, then there is the chance that the nonintended shift key will be mistakenly operated, and thus safety is reduced. Therefore, usually it is preferable to register one of the shift keys as valid.

Figure 3 shows the connection circuit of a system key 17, shift keys 11 and 12, switches 51 and 52, and operational teaching key unit 13 when the switch circuit 5 is used as a registration means. The teaching panel 1 is connected to a control unit (not shown), and the teaching operation is performed through the control unit to the robot apparatus. Therefore, the illustrated circuit is formed in the control unit. The switch circuit 5 is mounted in the control unit.

In the illustrated state the key operation of the operational teaching key unit 13 is valid only when the system key 17 is on and the shift key 12 is depressed. Therefore, even if the shift key 11 is mistakenly depressed, the key operation will be invalid.

The user selects either of the switches 51 and 52, or in some cases both, in advance in accordance with the own mode of utilization.

Further, it is possible to realize the registration means by a means other than the switch circuit, i.e., by setting valid and invalid flags for a microprocessor, etc., built in the control unit for performing a judgment of the operational keys.

According to the present invention, a shift key operation according to the mode of utilization of the user can be made, and a teaching panel with a further improved operability without a reduction in the degree of safety is obtained.

A teaching panel for a robot apparatus in accordance with the present invention can be applied for teaching operations is a variety of industrial robot apparatuses.

### EXPLANATION OF REFERENCES

- 1: teaching panel
- 2: control unit
- 11, 12: shift keys
- 13: operational teaching key unit
- 14: emergency stop
- 15: display unit
- 16: indicator unit
- 17: system key

## Claims

1. A teaching panel, for teaching operations to a robot apparatus through a control system, the panel comprising:
a plurality of teaching keys (13) for teaching a robot apparatus an operation; characterised by:
two shift keys (11,12) on the front of the panel at opposed positions;
registration means (5) for registering in advance user-selection of only one of the shift keys as a valid shift key or both of the shift keys each as a valid shift key;
the arrangement being such that teaching of a robot apparatus using the plurality of teaching keys (13) is enabled only when the valid shift key or one of the valid shift keys (11,12) is operated substantially simultaneously with the teaching keys (13).

2. A teaching panel according to claim 1, wherein the shift keys (11,12) are provided at positions easily operable by free fingers of a hand holding the teaching panel.

## Patentansprüche

1. Unterweisungspanel, um einem Roboter über ein Steuersystem Tätigkeiten anzuweisen, umfassend:
mehrere Unterweisungstasten (13), um einem Roboter einen Arbeitsvorgang anzuweisen, gekennzeichnet durch:
zwei Umschalttasten (11, 12) auf der Vorderseite des Panels an einander entgegengesetzten Stellen;
eine Registriereinrichtung (5) zur Vorab-Registrierung der Benutzer-Auswahl lediglich einer der Umschalttasten als gültige Umschalttaste oder beider Umschalttasten jeweils als gültige Umschalttasten;
wobei die Ausgestaltung derart ist, daß das Unterweisen eines Roboters unter Verwendung der Vielzahl von Unterweisungstasten (13) nur dann freigegeben wird, wenn die gültige Umschalttaste oder eine der gültigen Umschalttasten (11, 12) praktisch gleichzeitig mit den Unterweisungstasten (13) betätigt wird.

2. Unterweisungspanel nach Anspruch 1, bei dem die Umschalttasten (11, 12) an Stellen vorgesehen sind, die von freien Fingern einer das Unterweisungspanel haltenden Hand leicht betätigbar sind.

## Revendications

1. Tableau d'enseignement, destiné à l'enseignement d'opérations à un robot par l'intermédiaire d'un système de commande, le tableau comprenant :
plusieurs touches d'enseignement (13) servant à enseigner à un robot une opération ;
caractérisé par :
deux touches de déplacement (11, 12) disposées sur l'avant du tableau en des positions opposées ;
un moyen d'enregistrement (5) servant à enregistrer préalablement la sélection, par l'utilisateur, d'une seule des touches de déplacement au titre de la touche de déplacement valable ou bien des deux touches de déplacement, chacune au titre de touche de déplacement valable ;
le montage étant tel que l'enseignement d'un robot à l'aide des différentes touches d'enseignement (13) n'est validé que lorsque la touche de déplacement valable ou l'une des touches de déplacement valables (11, 12) est actionnée sensiblement en même temps que les touches d'enseignement (13).

2. Tableau d'enseignement selon la revendication 1, où les touches de déplacement (11, 12) se trouvent en des positions pouvant être facilement atteintes par des doigts libres de la main qui tient le tableau d'enseignement.
